# EUROPEAN PATENT SPECIFICATION

(11) **EP 3 658 629 B1**
(45) Date of publication and mention of the grant of the patent: **22.03.2023**
(21) Application number: 18745553.0
(22) Date of filing: 20.07.2018
(51) Int. Cl.: C09D 5/18

(54) **FAST CURING INTUMESCENT COATING COMPOSITIONS**
SCHNELL HÄRTBARE INTUMESZIERENDE BESCHICHTUNGSZUSAMMENSETZUNGEN
COMPOSITIONS DE REVÊTEMENT INTUMESCENT À DURCISSEMENT RAPIDE

(30) Priority: 24.07.2017 EP 17182747
(43) Date of publication of application: 03.06.2020
(73) Proprietor: PPG Coatings Europe B.V., 1047 BB Amsterdam (NL)
(72) Inventor: PESKENS, Ronnie, 2033 AP Haarlem (NL); VAN DER KOLK, Kees, 1911EE Uitgeest (NL); GRENIER, Christophe, Pittsburgh, Pennsylvania 15238 (US); LI, Hong, Mars, Pennsylvania 16046 (US); KALSANI, Venkateshwarlu, Gibsonia, Pennsylvania 15044 (US)
(74) Representative: f & e patent
(86) International application number: PCT/EP2018/069722
(87) International publication number: WO 2019/020506

(56) References cited:
- WO-A1-2006/067478
- GB-A- 2 444 364

## Description

### Background of the invention

The present invention relates to fire-protective intumescent curable compositions.

Many materials such as steel rapidly lose their strength and fail in a fire. Structural collapse of "high-rise" office blocks, oil and gas facilities or other infrastructure, and process vessel or pipework rupture as a result of a fire can be catastrophic in terms of escalation of the incident, damage to property, and even loss of life.

Intumescent coatings are used on many structures to delay the effects of a fire. These structures include profiled, cold rolled steel, concrete, wood, aluminum, mixed metals, plastic substrates and batteries. The coating slows the rate of temperature increase of the substrate to which the coating is applied. The coating thus increases the time before the structure fails due to the heat of fire. The extra time makes it more likely that fire fighters will be able to extinguish the fire or at least apply cooling water before the structure fails.

Intumescent coatings generally contain some form of resinous binder, for example a high-temperature polymer such as an epoxy resin and an appropriate crosslinker. The resinous binder forms the hard coating. If an epoxy resin is present in the binder, the binder also provides a source of carbon, which, in a fire, is converted to a char.

In addition, the coating contains additives called "spumifics" that give off gas in a fire, which causes the char to swell into a foam. The efficacy of the coatings is related to the formation, due to the action of heat, of a thick and porous char foam which operates as a conventional insulator. Thus, it is a very important requirement of an intumescent coating composition to have the ability to uniformly form a carbonaceous char during a fire, which will adhere to the substrate without cracking.

Curing agents that are often used to cure polyepoxide resins in intumescent coating compositions comprise polyamines. In such systems comprising epoxy resins and polyamine curing agent, the speed of cure can be slow, limiting both overcoat time and time for return to service. This problem is magnified in low temperature application conditions where the cure is slowed even further.

GB 2444364 discloses an intumescent multi-component epoxy resin coating composition, wherein the epoxy containing component further comprises at least one vinyl ester that is inter alia selected from 2-hydroxy alkyl (meth) acrylates.

Thus, it is an object of the present invention to provide an intumescent coating composition for fire protection that exhibits increased curing rates without compromising other important properties of the intumescent coating deposited from the intumescent coating composition like char expansion rate or char cracking properties, or insulation properties or even show improvement of such properties.

### Summary of the invention

These and other objects have been attained by an intumescent coating composition comprising
(a) a polyepoxy-functional compound;
(b) a beta-hydroxy ester of (meth)acrylic acid comprising a plurality of beta-hydroxy (meth)acrylic ester groups;
(c) a compound bearing a plurality of functional groups that are reactive with the epoxy groups of the polyepoxy-functional compound (a) and the (meth)acrylic ester groups of the beta-hydroxy ester of (meth)acrylic acid comprising a plurality of beta-hydroxy (meth)acrylic ester groups (b); and
(d) a compound providing an expansion gas upon thermal decomposition; wherein
compounds (a) to (d) differ from each other.

The present invention further relates to a method for coating a substrate comprising applying the intumescent coating composition according to the present invention to a substrate.

According to a further aspect, the present invention also relates to a method for imparting fire resistance to a substrate comprising applying the intumescent coating composition according to the present invention to the substrate.

The present invention, in addition, is also directed to a substrate that is at least partially coated with a coating deposited from the intumescent coating composition according to the present invention.

### DETAILED DESCRIPTION OF THE INVENTION

The intumescent coating composition according to the present invention comprises
(a) a polyepoxy-functional compound;
(b) a beta-hydroxy ester of (meth)acrylic acid comprising a plurality of beta-hydroxy (meth)acrylic ester groups;
(c) a compound bearing a plurality of functional groups that are reactive with the epoxy groups of the polyepoxy-functional compound (a) and the (meth)acrylic ester groups of the beta-hydroxy ester of (meth)acrylic acid comprising a plurality of beta-hydroxy (meth)acrylic ester groups (b); and
(d) a compound providing an expansion gas upon thermal decomposition.

The polyepoxy-functional compound according to the present invention may be selected from epoxy resin. A suitable range for epoxy equivalent weight of the epoxy resins that can be used according to the present invention is 100 to 6,000, suitably 100 to 700.

Suitable epoxy-functional resins include polyglycidyl ethers derived from polyhydric alcohols such as ethylene glycol, diethylene glycol, triethylene glycol, 1,2-propylene glycol, 1,4-butyleneglycol, 1,5-pentanediol, 1,2,6-hexanetriol, cyclohexanedimethanol, glycerol, thrimethylolpropane, bisphenol A, bisphenol F, hydrogenated bisphenol A, hydrogenated bisphenol F or polyether glycols, for example, poly(oxytetramethylene) glycol, poly(oxyethylene) glycol, poly(oxypropylene) glycol.

Another group of suitable epoxy resins include polyglycidyl ethers of polycarboxylic acids, formed by the reaction of an epoxy compound such as epichlorohydrin with an aliphatic or aromatic polycarboxylic acid such as oxalic acid, succinic acid, glutaric acid, terephthalic acid, 2,6-napthalene dicarboxylic acid, or dimerised linoleic acid.

Other suitable epoxy resins that can be used according to the present invention comprise epoxidized olefinically unsaturated alicyclic materials such as epoxy alicyclic ethers and esters, epoxy resins containing oxyalkylene groups, epoxy novolac resins, which are prepared by reacting an epihalohydrin with the condensation product of an aldehyde with a monohydric or polyhydric phenol such as epoxy phenol novolac resins or epoxy cresol novolac resins.

Furthermore, it can be advantageous according to the present invention to employ a flexible polyepoxide resin as polyepoxy-functional compound (a) of the intumescent coating composition of the present invention. These resins are generally essentially linear materials, although a small amount of branching is tolerated. Exemplary of suitable materials are epoxidized soybean oil, dimer acid-based materials such an EMPOL 1010 resin, which is commercially available from BASF SE, Ludwigshafen Germany and rubber-modified polyepoxide resins such as the product prepared from a polyglycidyl ether of bisphenol A and an acid-functional polybutadiene.

Other suitable examples of flexible polyepoxides for use according to the present invention is an epoxy-functional adduct which is prepared from a flexible acid-functional polyester and polyepoxide.

The acid-functional polyester generally has an acid value of at least 10 mg KOH/g, generally from about 140 to about 350 mg KOH/g and suitably from about 180 to about 260 mg KOH/g, as determined by ASTM 974-87.

Linear polyesters are more suitable than branched polyesters for use herein. Acid-functional polyesters can be prepared by the polyesterification of an organic polycarboxylic acid or anhydride thereof with an organic polyol. Usually, the polycarboxylic acids and polyols are aliphatic or aromatic dibasic acids and diols.

The diols which are usually employed in making the polyester include alkylene glycols, such as ethylene glycol, diethylene glycol, neopentyl glycol and other diols such as hydrogenated bisphenol A, cyclohexanediol, cyclohexanedimethanol, caprolactonediol, for example, the reaction product of epsilon-caprolactone and ethylene glycol, hydroxy-alkylated bisphenols, polyether glycols, for example, poly(oxytetramethylene) glycol, poly(oxyethylene) glycol, poly(oxypropylene) glycol and the like. Polyols of higher functionality can also be used although diols are more suitable. Examples include trimethylolpropane, trimethylolethane, pentaerythritol, glycerol, isosorbide, tetramethyl cyclobutane diol and the like, as well as higher molecular weight polyols such as those produced by oxyalkylating lower molecular weight polyols.

The acid component of the polyester comprises monomeric dicarboxylic acids or anhydrides having 2 to 36 carbon atoms per molecule. Among the acids which are useful are phthalic acid, isophthalic acid, terephthalic acid, tetrahydrophthalic acid, hexahydrophthalic acid, adipic acid, azelaic acid, sebacic acid, maleic acid, glutaric acid, chlorendic acid, tetrachlorophthalic acid, tetrabromomphthalic acid, decanedioic acid, dodecanedioic acid, rosin acids, diphenolic acid, gallic acid, and other dicarboxylic acids of varying types, for example, Diels-Alder adducts of unsaturated C₁₈ fatty acids.

The polyester may include minor amounts of monobasic acids such as benzoic acid, stearic acid, acetic acid, hydroxystearic acid and oleic acid. Also, there may be employed higher polycarboxylic acids such as trimellitic acid. Where acids are referred to above, it is understood that anhydrides of those acids which form anhydrides can be used in place of the acid. Also, lower alkyl esters of the acids such as dimethyl glutarate and dimethyl terephthalate can be used.

According to the present invention, the polyester used to make the epoxy-functional adduct may be prepared from a polycarboxylic acid component comprising a polycarboxylic acid or mixture of acids having from 7 to 16 carbon atoms and a polyol component comprising a portion of diethylene glycol.

The polyepoxides that are used to prepare the epoxy-functional adduct of flexible acid-functional polyester and polyepoxide can be selected from those as defined above for the polyepoxide-functional component according to the present invention.

Other suitable polyepoxy-functional compounds are epoxy functional acrylic resins. Such resins can be prepared by free-radical addition polymerization of (meth)acrylic monomers optionally in combination with vinyl monomers or other monomers comprising at least one carbon-carbon double bond, wherein the monomer composition comprises at least one epoxy functional compound having a one carbon-carbon double bond.

Suitable epoxy-functional ethylenically unsaturated monomers may be selected from glycidyl (meth)acrylate, allyl glycidylether, vinyl glycidylether, vinyl cyclohexene oxide, limonene oxide, 2-ethylglycidylacrylate, 2-ethylglycidylmethacrylate, 2-(n-propyl)glycidylacrylate, 2-(n-propyl)glycidylmethacrylate, 2-(n-butyl)glycidylacrylate, 2-(n-butyl)glycidylmethacrylate, glycidylmethylmethacrylate, glycidylacrylate, (3',4'-epoxyheptyl)-2-ethylacrylate, (3',4'-epoxyheptyl)-2-ethylmethacrylate, (6',7'-epoxyheptyl)acrylate, (6',7'-epoxyheptyl)methacrylate, allyl-3,4-epoxyheptylether, 6,7-epoxyheptylallylether, vinyl-3,4-epoxyheptylether, 3,4-epoxyheptylvinylether, 6,7-epoxyheptylvinylether, o-vinylbenzylglycidylether, m-vinylbenzylglycidylether, p-vinylbenzylglycidylether, 3-vinyl cyclohexene oxide, alpha-methyl glycidyl methacrylate, 3,4-epoxycyclohexylmethyl (meth)acrylate and combinations thereof. Glycidyl (meth)acrylate is particularly suitable.

Suitable additional monomers for the preparation of the epoxy-functional acrylic resin can be selected from
- ethylenically unsaturated nitrile compounds;
- vinyl aromatic monomers;
- alkyl esters of ethylenically unsaturated acids;
- hydroxyalkyl esters of ethylenically unsaturated acids;
- amides of ethylenically unsaturated acids;
- ethylenically unsaturated acids;
- ethylenically unsaturated sulfonic acid monomers and/or ethylenically unsaturated phosphorous-containing acid monomers
- vinyl carboxylates;
- conjugated dienes;
- monomers having at least two ethylenically unsaturated groups; and
- combinations thereof.

Examples of ethylenically unsaturated nitrile monomers which can be used for the preparation of the the epoxy-functional acrylic resin include polymerizable unsaturated aliphatic nitrile monomers which contain from 2 to 4 carbon atoms in a linear or branched arrangement, which may be substituted either by acetyl or additional nitrile groups. Such nitrile monomers include acrylonitrile, methacrylonitrile, alpha-cyanoethyl acrylonitrile, fumaronitrile and combinations thereof, with acrylonitrile being suitable.

Representatives of vinyl-aromatic monomers include, for example, styrene, α-methylstyrene, p-methylstyrene, t-butylstyrene and vinyltoluene. Suitably, the vinyl-aromatic monomers are selected from styrene, alpha-methyl styrene and combinations thereof.

Esters of (meth)acrylic acid that can be used for the preparation of the the epoxy-functional acrylic resin include n-alkyl esters, iso-alkyl esters or tert-alkyl esters of acrylic or (meth)acrylic acid in which the alkyl group has from 1 to 20 carbon atoms, the reaction product of methacrylic acid with glycidyl ester of a neoacid such as versatic acid, neodecanoic acid or pivalic acid and hydroxyalkyl (meth)acrylate and alkoxyalkyl (meth)acrylate monomers.

In general, suitable alkyl esters of (meth)acrylic acids may be selected from C₁-C₂₀ alkyl (meth)acrylate, suitably C₁-C₁₀-alkyl (meth)acrylates. Examples of such acrylate monomers include n-butyl acrylate, secondary butyl acrylate, methyl acrylate, ethyl acrylate, hexyl acrylate, tert-butyl acrylate, 2-ethyl-hexyl acrylate, isooctyl acrylate, 4-methyl-2-pentyl acrylate, 2-methylbutyl acrylate, methyl methacrylate, butyl methacrylate, n-butyl methacrylate, isobutyl methacrylate, ethyl methacrylate, isopropyl methacrylate, hexyl methacrylate, cyclohexyl methacrylate and cetyl methacrylate. It is particularly suitable to select the esters of (meth)acrylic acids from methyl (meth)acrylate, ethyl (meth)acrylate, propyl (meth)acrylate, butyl (meth)acrylate, 2-ethylhexyl (meth)acrylate and combinations thereof.

The hydroxy alkyl(meth)acrylate monomers which can be used for the preparation of the the epoxy-functional acrylic resin include hydroxyalkyl acrylate and methacrylate monomers which are based on ethylene oxide, propylene oxide and higher alkylene oxides or mixtures thereof. Examples are hydroxyethyl acrylate, hydroxypropyl acrylate, hydroxyethyl methacrylate, hydroxypropyl methacrylate and hydroxybutyl acrylate. Suitably, the hydroxy alkyl(meth)acrylate monomer is selected from 2-hydroxy ethyl (meth)acrylate.

Amides of ethylenically unsaturated acids that can be used for the preparation of the epoxy-functional acrylic resin include acrylamide, methacrylamide, and diacetone acrylamide. A particularly suitable amide monomer is (meth)acrylamide.

Vinyl ester monomers which can be used to prepare the epoxy-functional acrylic resin include vinyl acetate, vinyl proprionate, vinyl butyrate, vinyl benzoate, vinyl-2-ethylhexanoate, vinyl stearate, and the vinyl esters of versatic acid. The particularly suitable vinyl ester is vinyl acetate.

The ethylenically unsaturated carboxylic acid monomers suitable for the preparation of the epoxy-functional acrylic resin include monocarboxylic acid and dicarboxylic acid monomers and monoesters of dicarboxylic acid. Carrying out the present invention, it is particularly suitable to use ethylenically unsaturated aliphatic mono- or dicarboxylic acids or anhydrides which contain from 3 to 5 carbon atoms. Examples of monocarboxylic acid monomers include acrylic acid, methacrylic acid, crotonic acid and examples of dicarboxylic acid monomers include fumaric acid, itaconic acid, maleic acid and maleic anhydride. Examples of other suitable ethylenically unsaturated acids include vinyl acetic acid, vinyl lactic acid, vinyl sulfonic acid, 2-methyl-2-propene-1-sulfonic acid, styrene sulfonic acid, acrylamidomethyl propane sulfonic acid and the salts thereof. Suitably, the ethylenically unsaturated carboxylic acid monomers are selected from (meth)acrylic acid, crotonic acid, itaconic acid, maleic acid, fumaric acid and combinations thereof.

Conjugated diene monomers suitable for the preparation of the epoxy-functional acrylic resin include conjugated diene monomers, selected from 1,3-butadiene, isoprene, 2,3-dimethyl-1,3-butadiene, 2,3-dimethyl-1,3-butadiene, 2-chloro-1,3-butadiene, 1,3-pentadiene, 1,3-hexadiene, 2,4-hexadiene , 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7- methyl-3-methylene-1,6-octadiene, 1,3,7-octatriene, 2-ethyl-1, 3-butadiene, 2-amyl-1,3-butadiene, 3, 7-dimethyl-1,3,7-octatriene, 3,7-dimethyl-1,3,6-octatriene, 3,7,11-trimethyl-1,3,6,10-dodecatetraene, 7,11-dimethyl-3-methylene-1,6,10-dodecatriene, 2,6-dimethyl-2,4,6-octatriene, 2-phenyl-1,3-butadiene and 2-methyl-3-isopropyl-1,3-butadiene and 1,3-cyclohexadiene. 1,3-Butadiene, isoprene and combinations thereof are particularly suitable conjugated dienes.

It is also possible to use a combination of two or more, such as three or more or four or more, different polyepoxy-functional compounds (a) that may be selected from those as disclosed above.

Suitable polyepoxy-functional compounds (a) according to the present invention may be selected from diglycidyl ether of bisphenol A, diglycidyl ether of bisphenol F, resorcinol diglycidyl ether, epoxy phenol novolac resin, epoxy cresol novolac resins, epoxy functional (poly)siloxanes, epoxy functional polysilfides, epoxy-functional adducts of acid-functional polyesters and polyepoxides, for example, those that are described above.

The beta-hydroxy ester of (meth)acrylic acid comprising a plurality of beta-hydroxy (meth)acrylic ester groups (b) of the intumescent coating composition according to the present invention may be obtained from the reaction of a polyepoxide with (meth)acrylic acid. The polyepoxide can be reacted with the (meth)acrylic acid in an epoxy-carboxylic acid equivalent ratio of 1:0.1 to 1:1.2, suitably 1:0.5 to 1:1.2 more suitably 1:1 to 1:1.05.

The polyepoxides that can be used for the reaction product of polyepoxide with (meth)acrylic acid can be selected from those polyepoxides as disclosed above with respect to component (a) of the intumescent coating composition of the present invention.

Particularly suitable epoxides that can be used for making the beta-hydroxy ester of (meth)acrylic acid comprising a plurality of beta-hydroxy (meth)acrylic ester groups (component (b)) of the intumescent coating composition according to the present invention are selected from diglycidyl ether of bisphenol A, diglycidyl ether of bisphenol F, epoxy phenyl novolac resins, epoxy cresol novolac resins, epoxy functional acrylic resins, epoxy functional polyester or combinations thereof.

A particularly suitable beta-hydroxy ester of (meth)acrylic acid comprising a plurality of beta-hydroxy (meth)acrylic ester groups (component (b)) of the intumescent coating composition according to the present invention is the reaction product of EPIKOTE 828 (reaction product of bisphenol A with epichlorohydrin) with acrylic acid, commercially available from Allnex as EBECRYL 3720).

The present inventors found out that the partial substitution of conventional epoxy resins by the beta-hydroxy ester of (meth)acrylic acid comprising a plurality of beta-hydroxy (meth)acrylic ester groups according to component (b) of the intumescent coating composition of the present invention or the addition of component (b) results in a considerable increase of curing rate of the coating composition.

Without wanting to be bound by theory, it is believed that this increase in curing rate is due to the Michael addition reaction between the acrylic group of the beta-hydroxy ester of (meth)acrylic acid and the polyfunction component (c) of the intumescent coating composition according to the present invention.

The intumescent coating composition according to the present invention requires, in addition to the polyepoxy-functional compound, a compound (c) bearing a plurality of functional groups that are reactive with the epoxy groups of the polyepoxy-functional compound (a) and the (meth)acrylic ester groups of component (b) for curing the intumescent coating composition. Curing can take place either at ambient temperature or upon application of heat. The compound (c) may be selected from polyamine-functional compounds, polythiol compounds and combinations thereof.

The polyamine curing agent can be selected from aliphatic polyamines, aromatic polyamines, polyamine amides, polyetheramines, for example those commercially available from Huntsman Cooperation, The Woodlands, Texas, polysiloxane amines, polysulfide amines or combinations thereof. Examples include diethylene triamine, 3,3-amino-bis-propylamine, triethylene tetraamine, tetraethylene pentamine, m-xylylenediamine, and the reaction product of a polyamine and an aliphatic fatty acid such as the series of materials sold by BASF under the trademark VERSAMID can be used, the latter being particularly suitable.

The polythiol compounds may be selected from polysulfide thiols, polyether thiols, polyester thiols, pentaerythritol based thiols; or combinations thereof. A particularly suitable polythiol compound is Thioplast^{©} G4 commercially available from Akzo Nobel Functional Chemicals GmbH&Co KG, Greiz, Germany.

The present inventors have further recognized that it may be beneficial to include, as optional component (e), a (meth)acrylate-functional compound different from compound (b). By including such a (meth)acrylate-functional compound (e), the viscosity of the intumescent coating composition of the present invention can be suitably adjusted. Thus, it is believed that the optional component (e) functions as a reactive diluent in the intumescent coating composition of the present invention. The optional (meth)acrylate-functional component (e) of the intumescent coating composition of the present invention may be selected from poly(meth)acrylates of 1,4-butanediol, neopentyl glycol, ethylene glycol, 1,2-propanediol, 1,3-propanediol, 2,2,4-trimethyl-1,3-pentanediol, 1,6-hexanediol, 1,4-cyclohexane dimethanol, para-xylene glycol, 1,4-cyclohexane diol, trimethylolethane, trimethylolpropane, pentaerythritol, polyether glycols, for example, poly(oxytetramethylene) glycol, poly(oxyethylene) glycol, poly(oxypropylene) glycol and combinations thereof.

In the intumescent coating composition of the present invention the polyepoxy-functional compound (a) may be present in an amount of 20 to 95 wt.-%, suitably 40 to 95 wt.-%, and the beta-hydroxy ester of (meth)acrylic acid comprising a plurality of beta-hydroxy (meth)acrylic ester groups (b) may be present in an amount of 5 to 80 wt.-%, suitably 5 to 60 wt.-%, whereby the weight percentage is based on the total weight of polyepoxy-functional compound(s) (a) and beta-hydroxy ester(s) of (meth)acrylic acid comprising a plurality of beta-hydroxy (meth)acrylic ester groups (b).

Furthermore, in the intumescent coating composition of the present invention, the polyepoxy-functional compound (a) may be present in an amount of 25 to 95 wt.- %, suitably 40 to 95 wt.-%, the beta-hydroxy ester of (meth)acrylic acid comprising a plurality of beta-hydroxy (meth)acrylic ester groups (b) may be present in an amount of 5 to 75 wt.-%, suitably 5 to 60 wt.-%, and the (meth)acrylate-functional compound (e), different from compound (b), may be present in an amount 0 to 50 wt.-%, suitably 5 to 30 wt.-%, wherein the weight percentages are based on the total weight of compounds (a), (b) and (e).

In the intumescent coating composition of the present invention, the equivalent ratio of the combined epoxy groups and (meth)acrylate groups in components (a), (b) and (e) to the functional groups in component (c) may be from 2:1 to 1:2, suitably from 1.05:1.0 to 1:2, particularly suitable from 1:1.4 to 1:2.

The intumescent coating composition of the present invention further comprises, as component (d), a compound providing an expansion gas upon thermal decomposition.

The expansion gas serves to cause the fire-protective intumescent composition to foam and swell when exposed to high temperature of flames. As a result of this expansion the char which is formed is a thick, multicelled material which serves to insulate and protect the underlying substrate. The source of expansion gas that may be used in the intumescent coating composition of the present invention is a nitrogen-containing material. Examples of suitable nitrogen-containing materials include melamine, salts of phosphoric acid, guanidine, methylolated melamine, hexamethoxymethyl melamine, urea, dimethylurea, melamine pyrophosphate, dicyandiamide, guanylurea phosphate and glycine. Suitably, melamine is used. Other conventional sources of expansion gas can also be used such as those materials which liberate carbon dioxide. Examples are alkaline earth metals such as calcium carbonate or magnesium carbonate. Compounds which release water vapor as they decompose upon heating for example calcium hydroxide, magnesium dihydroxide or aluminum trihydroxide may also be used. Other examples of such compounds are boric acid and boric acid derivatives.

A suitable amount of component (d) in the intumescent coating composition of the present invention may range from 0.1 to 25 wt.-%, suitably 1 to 10 wt.-%, whereby the weight percentage is based on the total solids weight of the composition.

The intumescent coating composition of the present invention may comprise optional additives (f) that are selected from a phosphorous source, a boron source, a zinc source, an acid source, a carbon source, inorganic fillers, mineral fibers for example CHOPVANTAGE from PPG, Coatforce or Roxul fibers from Lapinus, rheology additives, organic solvents, pigments, foam stabilizers, and combinations thereof.

Furthermore, the intumescent coating composition of the present invention may comprise epoxy amine cure catalysts for example Ancamine^{®} K54 commercially available from Evonik Industries, Marl, Germany. Suitable Amounts of curing catalysts are 0.1 to 5 wt.-%, more suitably 1 to 3 wt.-% based on the total weight of the composition.

The source of phosphorous can be selected from a variety of materials, such as, for example, phosphoric acid, mono- and diammonium phosphate, tris-(2-chloroethyl)phosphate, phosphorus-containing amides such as phosphorylamide, and melamine pyrophosphate. Suitably, the source of phosphorous is an ammonium polyphosphate represented by the formula (NH₄)ₙ₊₂ PₙO₃ₙ₊₁, wherein n is an integer of at least 2, suitably n is an integer of at least 50. The intumescent coating composition of the present invention may contain an amount of phosphorous in the range of 0 to 20 wt.-%, suitably 0.5 to 10 wt.-%, based on the total solid weight of the coating composition. The phosphorous is believed to function as a char promoter in the intumescent composition.

The optional source of zinc can be selected from a variety of materials. It is believed that the zinc material contributes to the formation of a small-celled structure in the char. The small cells of the char afford better insulation of the substrate and are better able to retain the char's integrity and adhere to the substrate even in the absence of external reinforcing materials. Thus, cracking of the char and its breaking away from the substrate are minimized and a greater measure of protection is afforded to the underlying steel. Examples of suitable materials which are sources of zinc include zinc oxide, zinc salts, such as zinc borate and zinc phosphate, zinc carbonate, also zinc metal can be used. Suitably, zinc borate is utilized. The intumescent coating composition of the present invention may contain an amount of zinc in the range from 0 to 25 wt.-%, suitably 0.5 to 12 wt.-%, based on the total solids weight of the composition.

The source of boron may be selected from ammonium pentaborate or zinc borate, boron oxide, borates such as sodium borate, potassium borate and ammonium borate, borate esters such as butyl borates or phenyl borates and combinations thereof. The intumescent coating composition of the present invention may contain an amount of boron in the range from 0 to 10 wt.-%, suitably 1 to 6 wt.-%, whereby the weight percentage is based on the total solids weight of the composition.

The acid source may be selected from ammonium phosphate, ammonium polyphosphate, diammonium diphosphate, diammonium pentaborate, phosphoric acid generating materials, boric acid, metal or organic borates and combinations thereof.

The carbon source may be selected from, usually polyhydroxy compounds such as pentaerythritol, dipentaerythritol, glycerol, oligomeric glycerol, xylitol, mannitol, sorbitol and polymers such as polyamides, polycarbonates, polyurethanes, and combinations thereof.

It should be understood that the phosphorus, zinc, boron and expansion gas can each be provided by a separate source material or, alternatively, a single material may be a source of more than one of the aforelisted additional components. For example, melamine pyrophosphate can provide a source of both phosphorus and expansion gas.

The optional reinforcing fillers may be chosen from among a large array of conventionally utilized materials, including fibrous reinforcements and platelet reinforcements, which are suitable over other fillers. Examples of fibrous reinforcements include glass fibers, ceramic fibers, e.g., aluminum oxide/silicon oxide, and graphite fibers. Platelet reinforcements include hammer-mill glass flakes, mica, and wollastonite. Other suitable fillers include metal oxides, titanium oxides, clay, talc, silica, diatomaceous earth, lapinus^{®} fibers and various pigments. The reinforcing filler is believed to assist in controlling expansion of the fire-protective composition prior to and during char formation so that the resultant char is hard and uniform. When present, the reinforcing filler is usually present in the composition in an amount ranging from 1 to 50 wt.-%, based on the total solids weight of the intumescent coating composition.

The intumescent coating composition of the present invention may also contain a variety of conventional additives, such as rheology additives, organic solvents, foam stabilizers, pigments, flame spread control agents, and the like. These ingredients are optional and can be added in varying amounts.

The intumescent coating composition may be configured as two-package system, with the polyepoxy-functional compound (a), the beta-hydroxy ester of (meth)acrylic acid comprising a plurality of beta-hydroxy (meth)acrylic ester groups (b) and the (meth)acrylate-functional component (e), different from compound (b), if present, in a first package (A) and the component (c) in a second package (B), whereby the compound providing an expansion gas upon thermal decomposition (d) and any of the additives (f), if present, are comprised in any combination in either package (A) or package (B) or in both, or are comprised in one or more further packages (C). The individual packages are mixed prior to use of the intumescent coating composition.

The intumescent composition of the present invention, when it is prepared, is usually in the form of a thick material such as a mastic. It is particularly suitable that the composition be solvent-free and spray-applied. If desired, thinning can be accomplished with a variety of conventional solvents such as methylene chloride or 1,1,1-trichloroethane.

The intumescent curable composition of the present invention can be applied to a variety of substrates, particularly steel substrates, and when subjected to extreme variations in temperature over a short period of time do not exhibit cracking. This ultimately enhances the protection of the substrate should a fire occur. Therefore, the intumescent coating compositions of the present invention are particularly advantageous in providing a substrate which demonstrates a reduced rate of temperature rise when it is subjected to fire conditions.

The following examples are intended to be illustrative of the invention and are not intended to be limiting.

### Examples:

The Epoxy Pack of a two pack coating composition was formulated as follows.

For comparative example 1 Pittchar^{®} XP Component A commercially available from PPG Industries Pittsburgh PA that neither contains a beta-hydroxy ester of (meth)acrylic acid nor any other (meth)acrylate-functional compound was employed. For the inventive Examples 1-4 the commercial Pittchar^{®} product was modified by partially replacing the epoxy resin by Ebercryl 3720¹ and optionally TMPTA² based on functional equivalents as indicated in Table 1. For example, "50% Ebecryl 3720" means 50% of epoxy functionalities were replaced by acrylate functionalities. For comparative example 2 and 3 the commercial Pittchar^{®} product was modified by partially replacing the epoxy resin by TMPTA² based on functional equivalents as indicated in Table 1. Furthermore tri(2-chloroisopropyl)phosphate was added as indicated in Table 1. The amounts of the remaining ingredients of the Pittchar^{®} product were kept constant. The amounts in Table 1 are given in parts by weight.

**Table 1: Formulation of the Epoxy Pack**

| Ingredient | Function | Comp.Ex. 1 | Comp.Ex. 2 | Comp.Ex. 3 | Example 1 | Example 2 | Example 3 | Example 4 |
|---|---|---|---|---|---|---|---|---|
| | | no acrylate 100% epoxy | 50% TMPTA² | 25% TMPTA² | 50% mix of Ebecryl 3720¹ / TMPTA ² | 50% Ebecryl 3720¹ | 25% Ebecryl 3720¹ | 10% Ebecryl 3720¹ |
| Pittchar epoxy resin | resin | 43.77 | 29.68 | 37.79 | 25.95 | 24.29 | 34.53 | 40.19 |
| Ebecryl 3720¹ | resin | 0.00 | 0.00 | 0.00 | 9.19 | 13.41 | 6.36 | 2.47 |
| TMPTA² | resin | 0.00 | 6.68 | 2.83 | 2.11 | 0.00 | 0.00 | 0.00 |
| tris(2-chloroisopropyl)-phosphate³ | non-reactive diluent | 0.00 | 7.41 | 6.33 | 6.52 | 6.07 | 2.88 | 1.11 |

| | | | | | | | | |
|---|---|---|---|---|---|---|---|---|
| ¹ Ebecryl 3720 acrylated bisphenol-A diglycidyl ether from Allnex Belgium SA/NV Bruxelles, Belgium ² TMPTA trimethylol propane triacrylate from Sartomer Company Inc. Exton, PA, USA ³ tris(2-chloroisopropyl)phosphate from ICL-IP America Inc., Saint Louis, Missouri, USA | | | | | | | | |

The epoxy pack according to each example and comparative example was mixed with a cure pack containing a polyamine curing agent and melamine as a gas source commercially available as Pittchar XP Component B from PPG Industries Pittsburgh PA in amounts as indicated in Table 2 to provide an intumescent coating composition.

Following properties were measured and the results are reported in Table 2.

Viscosity of the Epoxy Pack: The viscosity of each of the epoxy packs was evaluated using a Brookfield DV-E viscometer with a #7 spindle, at a rotation rate of 6 rpm at 23°C.

Gel time: The epoxy pack according to each example and comparative example was mixed with the cure pack for 1-5 minutes until a homogenous mixture is obtained. The gel time was then measured as the time required to double the viscosity measured immediately after mixing. The viscosity was measured as indicated above for the measurement of the viscosity of the epoxy pack.

Drying time: Films for each epoxy-amine mix were applied on primed steel panels (7x3x3/16") using a drawdown bar (80 mils) and allowed to dry for 7 days at room temperature. Drying time was evaluated by placing a 1 kg weight on a cotton ball (3 cm diameter) placed on each coating for 10 seconds, removing the weight, blowing the cotton ball to the side and examining the surface for cotton fibers. The tack-free drying time corresponds to the time where no fibers remain on the coating surface.

Evaluation of expansion and char density: Films were applied on primed steel panels (7x3x3/16") using a 80 mils drawdown bar and allowed to dry for 7 days at room temperature. The intumescent thickness was measured and the panels were then exposed for 3 minutes to a gas torch at a distance of 14cm from the panels. Thickness after fire test was measured and a cross-section was cut to evaluate the char density, which was evaluated by assigning a score of 1 to 5, 5 corresponding to a dense char without defects and 1 corresponding to a mechanically weak char with defects or gaps.

Column Fire test: The intumescent coating compositions according to Comparative Example 1 and 3 and Example 3 were trowel-applied to ca. 5mm on 1 foot I-shaped W6x16 mild steel columns. The samples were dried for 1 week at ambient conditions. Final film thickness of paint was measured before fire testing, which was performed in accordance with UL1709. Fire tests were stopped when a steel temperature of 650°C was reached. In Table 2 the time to reach a steel temperature of 650°C is reported.

**Table 2:**

| | Comp.Ex. 1 | Comp.Ex. 2 | Comp.Ex. 3 | Example 1 | Example 2 | Example 3 | Example 4 |
|---|---|---|---|---|---|---|---|
| | no acrylate 100% epoxy | 50% TMPTA² | 25% TMPTA² | 50% mix of Ebecryl 3720¹ / TMPTA ² | 50% Ebecryl 3720¹ | 25% Ebecryl 3720¹ | 10% Ebecryl 3720¹ |
| Epoxy Pack wt.-% | 75 | 75 | 75 | 75 | 75 | 75 | 75 |
| Cure Pack wt.-% | 25 | 25 | 25 | 25 | 25 | 25 | 25 |
| Viscosity epoxy pack (Pas) | 323 | 316 | 365 | 435 | 605 | 431 | 331 |
| Gel Time (min) | 110 | 37 | | 31 | 25 | 49 | 80 |
| Tack-free time (days) | 4-8 | | | | <1 | 2 | 4-8 |
| Expansion | 3.5 | 6 | 4.5 | 9 | 11 | 6 | 4.5 |
| Density | 5 | 2 | 3 | 4 | 4 | 4 | 5 |
| time to 650°C (min) | 34.4 | | 32.5 | | | 45.8 | |

## Claims

1. An intumescent coating composition comprising:
(a) a polyepoxy-functional compound;
(b) a beta-hydroxy ester of (meth)acrylic acid comprising a plurality of beta-hydroxy (meth)acrylic ester groups;
(c) a compound bearing a plurality of functional groups that are reactive with the epoxy groups of the polyepoxy-functional compound (a) and the (meth)acrylic ester groups of the beta-hydroxy ester of (meth)acrylic acid comprising a plurality of beta-hydroxy (meth)acrylic ester groups (b); and
(d) a compound providing an expansion gas upon thermal decomposition; wherein
compounds (a) to (d) differ from each other.

2. The coating composition of Claim 1, further comprising
(e) a (meth)acrylate-functional compound different from compound (b) wherein the (meth)acrylate-functional compound (e) is suitably selected from poly(meth)acrylates of 1,4-butanediol, neopentyl glycol, ethylene glycol, 1,2-propanediol, 1,3-propanediol, 2,2,4-trimethyl-1,3-pentanediol, 1,6-hexanediol, 1,4-cyclohexane dimethanol, para-xylene glycol, 1,4-cyclohexane diol, trimethylolethane, trimethylolpropane, pentaerythritol and combinations thereof.

3. The coating composition of any of the preceding Claims, wherein the polyepoxy-functional compound (a) comprises diglycidyl ether of bisphenol A, diglygidyl ether of bisphenol F, an epoxy phenol novolac resin, an epoxy cresol novolac resin, epoxy functional acrylic resins, epoxy functional polyester or combinations thereof.

4. The coating composition of any of the preceding Claims, wherein the beta-hydroxy ester of (meth)acrylic acid comprising a plurality of beta-hydroxy (meth)acrylic ester groups (b), results from the reaction of a polyepoxide with (meth)acrylic acid, wherein the polyepoxide is suitably selected from diglycidyl ether of bisphenol A, diglygidyl ether of bisphenol F, an epoxy phenol novolac resin , an epoxy cresol novolac resin, epoxy functional acrylic resins, epoxy functional polyester or combinations thereof.

5. The coating composition of any of Claims 4, wherein the beta-hydroxy ester of (meth)acrylic acid comprising a plurality of beta-hydroxy (meth)acrylic ester groups (b) comprises the product of the reaction of a polyepoxide with (meth)acrylic acid in an epoxy carboxylic acid equivalent ratio of 1:0.1 to 1:1.015.

6. The coating composition of any of the preceding Claims, wherein the component (c) comprises
- a polyamine-functional compound suitably selected from an aliphatic polyamine, an aromatic polyamine, poly(amine-amides), and combinations thereof: or
- a polythiol-functional compound suitably selected from polysulfide thiols, polyether thiols, polyester thiols, pentaerythritol based thiols; or
- combinations thereof.

7. The coating composition of any of the preceding Claims, wherein the polyepoxy-functional compound (a) is present in an amount of 20 to 95 wt.- %, suitably 40 to 95 wt.-% and the beta-hydroxy ester of (meth)acrylic acid comprising a plurality of beta-hydroxy (meth)acrylic ester groups (b) is present in an amount of 5 to 80 wt.-%, suitably 5 to 60 wt.-% whereby the weight percentage is based on the total weight of polyepoxy-functional compound(s) (a) and beta-hydroxy ester(s) of (meth)acrylic acid comprising a plurality of beta-hydroxy (meth)acrylic ester groups (b).

8. The coating composition of any of the preceding Claims comprising
20 - 95 wt.-%, suitably 40 - 95 wt.-% of the polyepoxy-functional compound (a);
5 - 75 wt.-%, suitably 5 - 60 wt.-% of the beta-hydroxy ester of (meth)acrylic acid comprising a plurality of beta-hydroxy (meth)acrylic ester groups (b); and
0 - 50 wt.-%, suitably 5 - 30 wt.-% of the (meth)acrylate-functional compound (e) different from compound (b), wherein the weight percentages are based on the total weight of compounds (a), (b) and (e).

9. The coating composition of any of the preceding Claims, wherein the equivalent ratio of the combined epoxy groups and (meth)acrylate groups in (a), (b) and (e) to the functional groups in (c) is from 2:1 to 1:2, suitably 1.3:1.0 to 1.0:1.3.

10. The coating composition of any of the preceding Claims, further comprising additives (f) selected from a phosphorous source, a boron source, a zinc source, an acid source, a carbon source, reinforcing fillers, rheology additives, organic solvents, pigments, foam stabilizers, adhesion promoters, corrosion inhibitors, UV stabilizers and combinations thereof.

11. The coating composition of any of the preceding Claims, being a multi-package coating composition, wherein
the polyepoxy-functional compound (a), the beta-hydroxy ester of (meth)acrylic acid comprising a plurality of beta-hydroxy (meth)acrylic ester groups (b) and the (meth)acrylate-functional compound (e) different from compound (b) if present are comprised in a first package (A)
the compound bearing a plurality of functional groups that are reactive with the epoxy groups of the polyepoxy-functional compound (a) and the (meth)acrylic ester groups of the beta-hydroxy ester of (meth)acrylic acid comprising a plurality of beta-hydroxy (meth)acrylic ester groups (b) (c) is comprised in a second package (B); and
the compound providing an expansion gas upon thermal decomposition (d) and any of the additives (f) if present are comprised in any combination in either package (A) or package (B) or in both or are comprised in one or more further packages (C); wherein the packages are mixed immediately prior to application of the coating composition.

12. A method for coating a substrate comprising applying the intumescent coating composition according to any of Claims 1-11 to a substrate.

13. A method of imparting fire resistance to a substrate comprising applying the intumescent coating composition according to any of Claims 1-11 to a substrate.

14. The method of any of Claims 12 or 13, wherein the substrate comprises a metal substrate, suitably steel substrate.

15. A substrate at least partially coated with a coating deposited from the intumescent coating composition of any of Claims 1-11, wherein the substrate suitably comprises a metal substrate, more suitably a steel substrate.

## Patentansprüche

1. Intumeszierende Beschichtungszusammensetzung enthaltend:
(a) eine polyepoxyfunktionelle Verbindung,
(b) einen β-Hydroxyester der (Meth)acrylsäure enthaltend eine Mehrzahl von β-Hydroxy(meth)acrylestergruppen,
(c) eine Verbindung, die eine Mehrzahl von funktionellen Gruppen trägt, die mit den Epoxygruppen der polyepoxyfunktionellen Verbindung (a) und den (Meth)acrylestergruppen des β-Hydroxyesters der (Meth)acrylsäure (b), der eine Vielzahl von von β-Hydroxy(meth)acrylestergruppen enthält, reaktiv sind und
(d) eine Verbindung, die ein Expansionsgas bei thermischer Zersetzung bereitstellt, wobei
Verbindungen (a) bis (d) sich voneinander unterscheiden.

2. Die Beschichtungszusammensetzung nach Anspruch 1 zusätzlich enthaltend
(e) eine (meth)acrylatfunktionelle Verbindung, die sich von (b) unterscheidet, wobei die (meth)acrylatfunktionelle Verbindung (e) geeigneterweise aus Poly(meth)acrylaten von 1,4-Butandiol, Neopentylglykol, Ethylenglykol, 1,2-Propandiol, 1,3-Propandiol, 2,2,4-Trimethyl-1,3-pentandiol, 1,6-Hexandiol, 1,4-Cyclohexandimethanol, para-Xylolglykol, 1,4-Cyclohexandiol, Trimethylolethan, Trimethylolpropan, Pentaerythritol und Kombinationen davon ausgewählt ist.

3. Die Beschichtungszusammensetzung nach einem der vorstehenden Ansprüche, wobei die polyepoxyfunktionelle Verbindung (a) Diglycidylether von Bisphenol-A, Diglycidylether von Bisphenol-F, ein Epoxyphenol-Novolac-Harz, ein Epoxy-Cresol-Novolac-Harz, epoxyfunktionelle Acrylharze, epoxyfunktionelle Polyester oder Kombinationen davon enthält.

4. Die Beschichtungszusammensetzung nach einem der vorstehenden Ansprüche, wobei der β-Hydroxyester von (Meth)acrylsäure (b), der eine Vielzahl von β-Hydroxy(meth)acrylestergruppen enthält, aus der Reaktion eines Polyepoxids mit (Meth)acrylsäure resultiert, wobei das Polyepoxid geeigneterweise aus Diglycidylether von Bisphenol-A, Diglycidylether von Bisphenol-F, einem Epoxyphenol-Novolac-Harz, einem Epoxy-Cresol-Novolac-Harz, epoxyfunktionellen Acrylharzen, epoxyfunktionellen Polyestern oder Kombinationen davon ausgewählt ist.

5. Die Beschichtungszusammensetzung nach Anspruch 4, wobei der β-Hydroxyester der (Meth)acrylsäure (b), der eine Vielzahl von von β-Hydroxy(meth)acrylestergruppen enthält, das Produkt der Reaktion eines Polyepoxids mit (Meth)acrylsäure in einem Epoxy-Carbonsäure-Äquivalentverhältnis von 1:0,1 bis 1:1,015 enthält.

6. Die Beschichtungszusammensetzung nach einem der vorstehenden Ansprüche, wobei die Komponente (c) enthält:
- eine polyaminfunktionelle Verbindung, die geeigneterweise aus einem aliphatischen Polyamin, einem aromatischem Polyamin, Poly(aminamiden) und Kombinationen davon ausgewählt ist oder
- eine polythiolfunktionelle Verbindung, die geeigneterweise aus Polysulfidthiolen, Polyetherthiolen, Polyesterthiolen, pentaerithritolbasierten Thiolen ausgewählt ist oder
- Kombinationen davon.

7. Die Beschichtungszusammensetzung nach einem der vorstehenden Ansprüche, wobei die polyepoxyfunktionelle Verbindung (a) in einer Menge von 20 bis 95 Gew.-%, geeigneterweise 40 bis 95 Gew.-% vorhanden ist, und der β-Hydroxyester der (Meth)acrylsäure (b), der eine Vielzahl von β-Hydroxy(meth)acrylestergruppen enthält, in einer Menge von 5 bis 80 Gew.-%, geeigneterweise 5 bis 60 Gew.-%, vorhanden ist, wobei die Gewichtsprozentangaben sich auf das Gesamtgewicht von polyepoxyfunktioneller/n Verbindung(en) (a) und β-Hydroxyester(n) der (Meth)acrylsäure (b), der/die eine Vielzahl von β-Hydroxy(meth)acrylestergruppen enthält/enthalten, bezieht.

8. Die Beschichtungszusammensetzung nach einem der vorstehenden Ansprüche
20 bis 95 Gew.-%, geeigneterweise 40 bis 95 Gew.-%, der polyepoxyfunktionellen Verbindung (a),
5 bis 75 Gew.-%, geeigneterweise 5 bis 60 Gew.-%, des β-Hydroxyesters der (Meth)acrylsäure (b), der eine Vielzahl von β-Hydroxy(meth)acryl-estergruppen enthält, und
0 bis 50 Gew.-%, geeigneterweise 5 bis 30 Gew.-%, der (meth)acrylat-funktionellen Verbindung (e), die sich von der Verbindung (b) unterscheidet, wobei die Gewichtsprozentangaben sich auf das Gesamtgewicht der Verbindungen (a), (b) und (e) beziehen.

9. Die Beschichtungszusammensetzung nach einem der vorstehenden Ansprüche, wobei das Äquivalentverhältnis der kombinierten Epoxygruppen und (Meth)acrylatgruppen in (a), (b) und (e) zu den funktionellen Gruppen in (c) von 2:1 bis 1:2, geeigneterweise von 1,3:1,0 bis 1,0:1,3 beträgt.

10. Die Beschichtungszusammensetzung nach einem der vorstehenden Ansprüche zusätzlich enthaltend Additive (f), ausgewählt aus einer Phosphorquelle, einer Borquelle, ein Zinkquelle, einer Säurequelle, einer Kohlenstoffquelle, verstärkenden Füllstoffen, Rheologieadditiven, organischen Lösungsmitteln, Pigmenten, Schaumstabilisatoren, Haftvermittlern, Korrosionsinhibitoren, UV-Stabilisatoren und Kombinationen davon.

11. Die Beschichtungszusammensetzung nach einem der vorstehenden Ansprüche, die eine Mehrkomponentenbeschichtungszusammensetzung ist, wobei
die polyepoxyfunktionelle Verbindung (a), der β-Hydroxyester der (Meth)-acrylsäure (b), der eine Vielzahl von β-Hydroxy(meth)acrylestergruppen enthält, und die (meth)acrylatfunktionelle Verbindung (e), die sich von Komponente (b) unterscheidet, falls vorhanden, in einer ersten Packung (A) enthalten sind,
die Verbindung, die eine Vielzahl von funktionellen Gruppen enthält, die mit den Epoxygruppen der polyepoxyfunktionellen Verbindung (a) und den (Meth)acrylestergruppen des β-Hydroxyesters der (Meth)acrylsäure (b), der eine Vielzahl von β-Hydroxy(meth)acrylestergruppen enthält, reaktiv sind, (c) in einer zweiten Packung (B) enthalten ist, und
die Verbindung, die ein Expansionsgas bei thermischer Zersetzung bereitstellt, (d) und jegliche der Additive (f), falls vorhanden, in jeglicher Kombination in entweder Packung (A) oder Packung (B) oder in beiden oder in einer oder mehreren weiteren Packungen (C) vorhanden sind, wobei die Packungen unmittelbar vor dem Aufbringen der Beschichtungszusammensetzung vermischt werden.

12. Ein Verfahren zur Beschichtung eines Substrats, umfassend ein Aufbringen der intumeszierenden Beschichtungszusammensetzung gemäß einem der Ansprüche 1 bis 11 auf ein Substrat.

13. Ein Verfahren, um ein Substrat feuerbeständig zu machen, umfassend ein Aufbringen der intumeszierenden Beschichtungszusammensetzung gemäß einem der Ansprüche 1 bis 11 auf ein Substrat.

14. Das Verfahren nach einem der Ansprüche 12 oder 13, wobei das Substrat ein Metallsubstrat, geeigneterweise ein Stahlsubstrat, umfasst.

15. Ein Substrat, das zumindest teilweise mit einer Beschichtung beschichtet ist, die von der intumeszierenden Beschichtungszusammensetzung nach einem der Ansprüche 1 bis 11 abgeschieden ist, wobei das Substrat geeigneterweise ein Metallsubstrat, noch geeigneter ein Stahlsubstrat umfasst.

## Revendications

1. Composition de revêtement intumescent, comprenant :
a) un composé comportant plusieurs groupes fonctionnels époxy,
b) un bêta-hydroxy-ester d'acide (méth)acrylique, comportant plusieurs groupes esters bêta-hydroxy-(méth)acrylate,
c) un composé portant plusieurs groupes fonctionnels réactifs vis-à-vis des groupes époxy du composé (a) comportant plusieurs groupes fonctionnels époxy et des groupes esters (méth)acrylate du bêta-hydroxy-ester d'acide (méth)acrylique (b) comportant plusieurs groupes esters bêta-hydroxy-(méth)acrylate,
d) et un composé fournissant un gaz pour expansion, par suite d'une décomposition thermique,
étant entendu que les composés (a) à (d) diffèrent les uns des autres.

2. Composition de revêtement conforme à la revendication 1, qui comprend en outre
e) un composé à groupes fonctionnels (méth)acrylate, différent du composé (b), lequel composé (e) à groupes fonctionnels (méth)acrylate est convenablement choisi parmi les poly(méth)acrylates de butane-1,4-diol, de néopentyl-glycol, d'éthylèneglycol, de propane-1,2-diol, de propane-1,3,diol, de 2,2,4-triméthyl-pentane-1,3-diol, d'hexane-1,6-diol, de cyclohexane-1,4-diméthanol, de para-xylène-glycol, de cyclohexane-1,4-diol, de triméthylol-éthane, de triméthylol-propane et de pentaérythritol, et leurs combinaisons.

3. Composition de revêtement conforme à l'une des revendications précédentes, dans laquelle le composé (a) comportant plusieurs groupes fonctionnels époxy englobe de l'éther diglycidylique de bisphénol A, de l'éther diglycidylique de bisphénol F, une résine époxy-novolaque au phénol, une résine époxy-novolaque au crésol, des résines polyacryliques à groupes fonctionnels époxy, un polyester à groupes fonctionnels époxy, ou des combinaisons de tels composés.

4. Composition de revêtement conforme à l'une des revendications précédentes, dans laquelle le bêta-hydroxy-ester d'acide (méth)acrylique (b) comportant plusieurs groupes esters bêta-hydroxy-(méth)acrylate résulte de la réaction d'un polyépoxyde avec de l'acide (méth)acrylique, lequel polyépoxyde est convenablement choisi parmi l'éther diglycidylique de bisphénol A, l'éther diglycidylique de bisphénol F, une résine époxy-novolaque au phénol, une résine époxy-novolaque au crésol, des résines polyacryliques à groupes fonctionnels époxy, un polyester à groupes fonctionnels époxy, ou des combinaisons de tels composés.

5. Composition de revêtement conforme à la revendication 4, dans laquelle le bêta-hydroxy-ester d'acide (méth)acrylique (b) comportant plusieurs groupes esters bêta-hydroxy-(méth)acrylate comprend le produit de réaction d'un polyépoxyde avec de l'acide (méth)acrylique, en un rapport d'équivalents époxy/(acide carboxylique) valant de 1/0,1 à 1/1,015.

6. Composition de revêtement conforme à l'une des revendications précédentes, dans laquelle le composant (c) comprend :
- un composé comportant plusieurs groupes fonctionnels amino, convenablement choisi parmi une polyamine aliphatique, une polyamine aromatique, les poly(amino-amide) et les combinaisons de tels composés,
- un composé comportant plusieurs groupes fonctionnels thiol, convenablement choisi parmi les polysulfure-thiols, les polyéther-thiols, les polyester-thiols, et les thiols à base de pentaérythritol,
- ou une combinaison de tels composés.

7. Composition de revêtement conforme à l'une des revendications précédentes, dans laquelle le composé (a) comportant plusieurs groupes fonctionnels époxy se trouve présent en une proportion de 20 à 95 % en poids, et convenablement de 40 à 95 % en poids, et le bêta-hydroxy-ester d'acide (méth)acrylique (b) comportant plusieurs groupes esters bêta-hydroxy-(méth)acrylate se trouve présent en une proportion de 5 à 80 % en poids, et convenablement de 5 à 60 % en poids, étant entendu que ces pourcentages en poids sont rapportés au poids total du ou des composé(s) (a) comportant plusieurs groupes fonctionnels époxy et du ou des bêta-hydroxy-ester(s) d'acide (méth)acrylique (b) comportant plusieurs groupes esters bêta-hydroxy-(méth)acrylate.

8. Composition de revêtement conforme à l'une des revendications précédentes, comprenant :
- de 20 à 95 % en poids, et convenablement de 40 à 95 % en poids, du composé (a) comportant plusieurs groupes fonctionnels époxy,
- de 5 à 75 % en poids, et convenablement de 5 à 60 % en poids, du bêta-hydroxy-ester d'acide (méth)acrylique (b) comportant plusieurs groupes esters bêta-hydroxy-(méth)acrylate,
- et de 0 à 50 % en poids, et convenablement de 5 à 30 % en poids, du composé (e) à groupes fonctionnels (méth)acrylate, différent du composé (b),
étant entendu que ces pourcentages en poids sont rapportés au poids total des composés (a), (b) et (e).

9. Composition de revêtement conforme à l'une des revendications précédentes, dans laquelle le rapport d'équivalents des groupes époxy et des groupes (méth)acrylate, considérés ensemble, des composés (a), (b) et (e) aux groupes fonctionnels du composant (c) vaut de 2/1 à 1/2, et convenablement de 1,3/1,0 à 1,0/1,3.

10. Composition de revêtement conforme à l'une des revendications précédentes, qui comprend en outre des adjuvants (f) choisis parmi une source de phosphore, une source de bore, une source de zinc, une source d'acide, une source de carbone, des charges de renfort, des adjuvants de rhéologie, des solvants organiques, des pigments, des stabilisateurs de mousse, des promoteurs d'adhérence, des inhibiteurs de corrosion, des stabilisants UV, et des combinaisons de tels adjuvants.

11. Composition de revêtement conforme à l'une des revendications précédentes, qui est une composition de revêtement multi-emballage dans laquelle
- le composé (a) comportant plusieurs groupes fonctionnels époxy et le bêta-hydroxy-ester d'acide (méth)acrylique (b) comportant plusieurs groupes esters bêta-hydroxy-(méth)acrylate, ainsi que, s'il y en a, le composé (e) à groupes fonctionnels (méth)acrylate différent du composé (b), se trouvent dans un premier emballage (A),
- le composé portant plusieurs groupes fonctionnels réactifs vis-à-vis des groupes époxy du composé (a) comportant plusieurs groupes fonctionnels époxy et des groupes esters (méth)acrylate du bêta-hydroxy-ester d'acide (méth)acrylique (b) comportant plusieurs groupes esters bêta-hydroxy-(méth)acrylate (c) se trouve dans un deuxième emballage (B),
- et le composé (d) fournissant un gaz pour expansion par suite d'une décomposition thermique et, s'il y en a, n'importe lequel des adjuvants (f) se trouvent, en n'importe quelle combinaison, dans l'un ou l'autre des emballages (A) et (B) ou dans les deux, ou bien se trouvent dans un ou plusieurs emballage(s) supplémentaires (C),
étant entendu que les contenus des emballages sont mélangés immédiatement avant l'application de la composition de revêtement.

12. Procédé de revêtement d'un substrat, comportant l'application, sur un substrat, d'une composition de revêtement intumescent conforme à l'une des revendications 1 à 11.

13. Procédé visant à rendre un substrat résistant au feu, comportant l'application, sur un substrat, d'une composition de revêtement intumescent conforme à l'une des revendications 1 à 11.

14. Procédé conforme à la revendication 12 ou 13, dans lequel le substrat comprend un substrat métallique, et convenablement un substrat en acier.

15. Substrat revêtu, au moins en partie, d'un revêtement obtenu par dépôt d'une composition de revêtement intumescent conforme à l'une des revendications 1 à 11, lequel substrat comprend convenablement, un substrat métallique, et plus convenablement, un substrat en acier.
